# FASCICULE DE BREVET EUROPEEN

(11) **EP 2 193 014 B1**
(45) Date de publication et mention de la délivrance du brevet: **13.07.2011**
(21) Numéro de dépôt: 08839850.8
(22) Date de dépôt: 23.09.2008
(51) Int. Cl.: B29C 43/36, B29C 70/54, B29C 70/44

(54) **DISPOSITIF POUR LA FABRICATION D'UNE PIECE EN MATERIAU COMPOSITE INTEGRANT UN SYSTEME DE DRAINAGE ET PROCEDE UTILISANT LE MÊME**
VORRICHTUNG ZUR HERSTELLUNG EINES TEILS AUS EINEM VERBUNDMATERIAL MIT EINEM ENTWÄSSERUNGSSYSTEM UND VERFAHREN ZUR VERWENDUNG DER SELBEN
DEVICE FOR PRODUCING A PART FROM COMPOSITE MATERIAL, INCLUDING A DRAINAGE SYSTEM AND PROCESS USING THE SAME

(30) Priorité: 24.09.2007 FR 0757795
(43) Date de publication de la demande: 09.06.2010
(73) Titulaire: Airbus Opérations SAS, 31060 Toulouse (FR)
(72) Inventeur: BOYELDIEU, Aurélien, F-44230 Saint Sébastien (FR); CHARBONNIER, Virginie, F-44330 La Chapelle Heulin (FR)
(74) Mandataire: Fantin, Laurent
(86) Numéro de dépôt international: PCT/FR2008/051696
(87) Numéro de publication internationale: WO 2009/050362

(56) Documents cités:
- WO-A-2005/053939
- DE-C1- 19 853 709
- US-A- 4 942 013
- US-A1- 2006 068 170

## Description

La présente invention se rapporte à un dispositif pour la fabrication d'une pièce en matériau composite, ledit dispositif intégrant un système de drainage et étant plus particulièrement destiné à la fabrication de panneaux de forme complexe, notamment à double courbure.

La construction aéronautique tend à recourir aux matériaux composites pour la réalisation de certaines parties d'un aéronef, notamment les panneaux formant la peau externe du fuselage, afin de réduire la masse embarquée.

En contact avec des flux aérodynamiques importants, la surface extérieure du fuselage doit avoir un état de surface conférant à l'aéronef les meilleures caractéristiques aérodynamiques. En effet, les défauts de surface engendrent une augmentation de la traînée et par conséquent une augmentation de la consommation énergétique de l'appareil.

Selon une autre contrainte, pour éviter les phénomènes d'érosion, il faut également que la surface extérieure du fuselage en contact avec l'air ne comprennent aucune porosité.

Les pièces réalisées en matériau composite comprennent une matrice en résine renforcée par des fibres. Selon un mode de réalisation répandu, les fibres se présentent sous la forme d'un ou plusieurs pli(s) tissé(s) ou non, pré-imprégné(s) de résine thermodurcissable. En variante, les fibres peuvent ne pas être pré-imprégnées. Dans ce cas, on utilise au moins un film de résine.

Pour assurer la consolidation de la pièce en matériaux composites, il est nécessaire d'augmenter la température pour obtenir la polymérisation de la résine. On exerce une pression lors de la polymérisation afin de chasser l'air et les solvants, pour réduire la porosité et pour éviter les risques de défauts susceptibles de réduire les caractéristiques mécaniques de la pièce.

La présente invention se rapporte plus particulièrement au mode opératoire consistant à utiliser une vessie de compactage pour exercer la pression et un autoclave pour la polymérisation. Un tel mode opératoire est utilisé pour le procédé de fabrication d'un fuselage d'aéronef en matériau composite décrit dans le document FR-2.894.869.

Selon ce mode opératoire, il est nécessaire de prévoir des moyens de drainage disposés entre la pièce et la vessie pour évacuer les gaz.

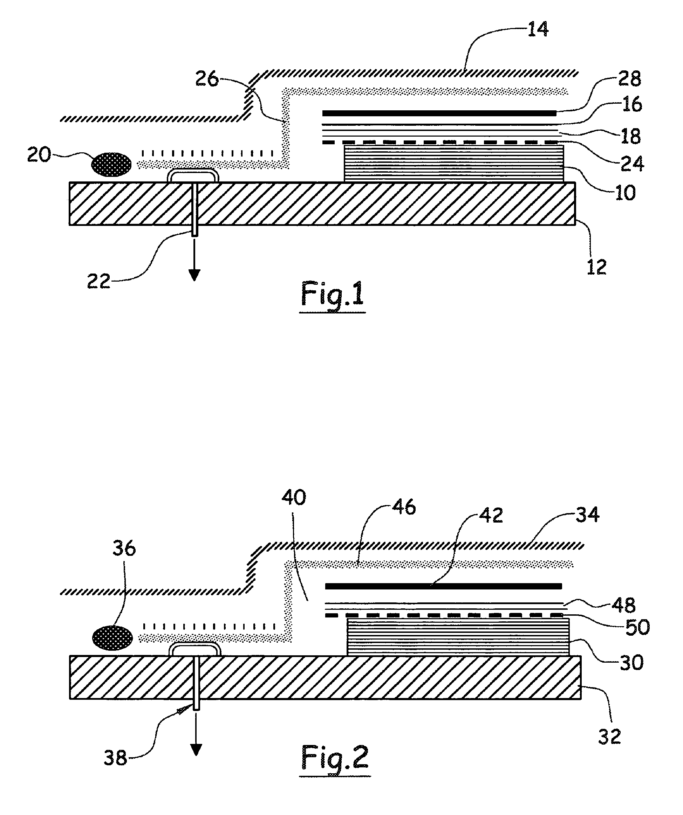

Sur la figure 1, on a représenté un dispositif de l'art antérieur. On retrouve en 10 la pièce en matériau composite rapportée sur un moule 12 et recouverte par une vessie de compactage 14. Des moyens de drainage, sous la forme d'un tissu drainant 16, sont intercalés entre la pièce 10 et la vessie 14. En complément, un film non perforé 18, permettant de laisser passer les gaz mais retenant la résine lors de la polymérisation, est intercalé entre la pièce 10 et le tissu drainant 16.

En complément le dispositif comprend un joint 20, prévu pour l'étanchéité, intercalé entre le moule 12 et la vessie 14, en périphérie de la pièce 10 ainsi que des moyens 22 pour assurer la dépression et/ou l'évacuation des gaz.

De préférence, on peut prévoir un film à délaminer 24, en contact direct avec la pièce, favorisant le retrait des différentes couches rapportées sur la pièce à l'issue du procédé.

D'autres moyens de drainage, par exemple un tissu de verre drainant 26, peuvent être prévus.

Afin de conformer la face de la pièce 10 qui n'est pas en contact avec le moule 12, une tôle 28, appelée également plaque de conformage, peut être placée entre le tissu drainant 16 et la vessie 14. Cette plaque 28 de conformage permet également de lisser la surface et d'homogénéiser la répartition des efforts de pression exercés par la vessie à la surface de la pièce 10. Aussi, cette plaque de conformage est lisse et ne comprend aucune aspérité pour assurer la fonction de lissage.

Lorsque la pièce a de grandes dimensions, ce qui est le cas des panneaux pour le fuselage, la mise en place du tissu de drainage s'avère problématique, le tissu ayant une structure souple susceptible de se froisser. En effet, si le tissu de drainage est déposé avec des plis, ces derniers se dupliquent sur la surface extérieure du panneau en matériau composite qui est ainsi marqué. Ces marques ne sont pas acceptables car elles conduisent à augmenter la traînée.

Par conséquent, la mise en place du tissu de drainage doit être réalisée avec minutie ce qui conduit à rendre longue et fastidieuse cette opération.

Cette problématique est accentuée dans le cas de panneaux à double courbure. En effet, dans ce cas, le tissu drainant ne peut pas s'adapter, sans pli, à la surface extérieure du panneau en matériau composite et comprend nécessairement des plis.

Une solution consiste alors à ne pas utiliser une seule pièce de tissu drainant susceptible de recouvrir la totalité du panneau mais une pluralité de pièces pour obtenir une forme tridimensionnelle adaptée à la forme du panneau.

Toutefois, cette solution n'est pas satisfaisante car elle est relativement longue et coûteuse en raison de la multiplication des pièces à rapporter. De plus, comme précédemment, la mise en place doit être réalisée avec minutie pour éviter de froisser le tissu drainant et marquer la surface extérieure du panneau.

Enfin, les zones de jonction entre les pièces ont tendance à marquer la surface extérieure.

Les documents US-4.942.013 et WO-2005/053939 décrivent des moyens pour comprimer la pièce à réaliser comportant une plaque avec des perforations.

En particulier, le document US-4.942.013 divulgue un dispositif selon le préambule de la revendication 1 et un procédé selon le préambule de la revendication 8.

Aussi, la présente invention vise à pallier les inconvénients de l'art antérieur en proposant un dispositif pour la réalisation d'une pièce en matériau composite intégrant un système de drainage simplifiant sa mise en place et limitant le risque d'apparition de marques à la surface de la pièce réalisée, susceptibles de dégrader les caractéristiques aérodynamiques de ladite pièce.

A cet effet, l'invention a pour objet un dispositif pour réaliser une pièce en matériau composite destinée à être en contact avec des flux aérodynamiques, notamment une partie du fuselage, selon la revendication 1 et un procédé selon la revendication 8.

D'autres caractéristiques et avantages ressortiront de la description qui va suivre de l'invention, description donnée à titre d'exemple uniquement, en regard des dessins annexés sur lesquels :
- la figure 1 est une coupe illustrant un dispositif pour réaliser une pièce en matériau composite selon l'art antérieur,
- la figure 2 est une coupe illustrant un dispositif pour réaliser une pièce en matériau composite selon l'invention,
- la figure 3 est une vue de dessus illustrant une partie d'une plaque drainante selon l'invention, et
- la figure 4 est une vue en perspective illustrant un dispositif pour réaliser un panneau d'un fuselage d'aéronef selon l'invention.

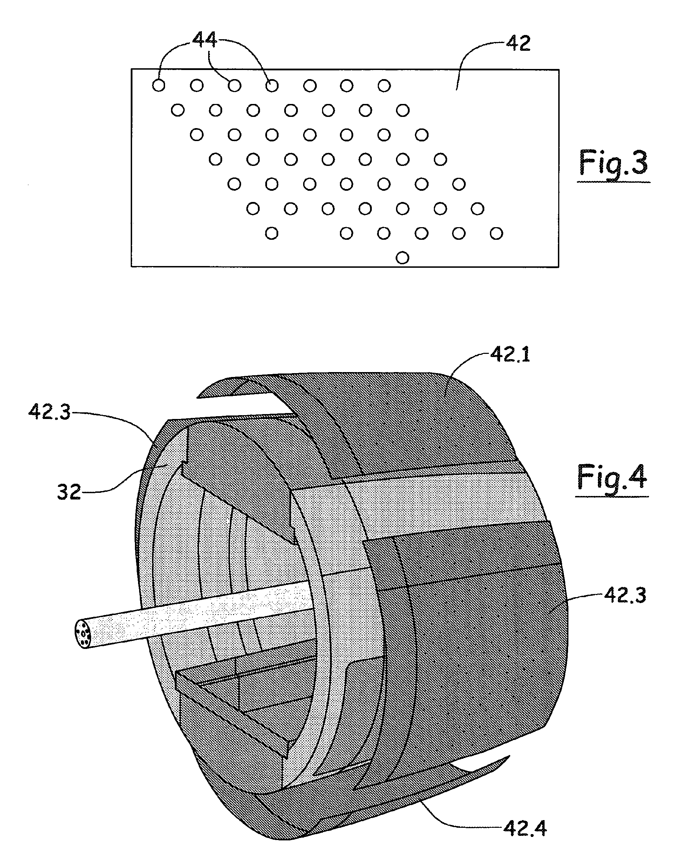

Sur les figures 3 et 4, on a représenté un dispositif pour réaliser une pièce en matériau composite 30, plus particulièrement adapté pour réaliser un panneau de grandes tailles susceptible de former une partie du fuselage d'un aéronef. Même si l'invention est décrite pour cette application, elle n'est aucunement limitée à cette dernière.

De manière connue, la pièce en matériau composite comprend une matrice de résine renforcée de fibres. Selon un mode de réalisation largement répandu, la pièce en matériau composite est obtenue à partir d'un ou plusieurs pli(s) tissé(s) ou non, pré-imprégné(s) de résine thermodurcissable ou non. En variante, les fibres peuvent ne pas être pré-imprégnées, au moins un film de résine étant alors nécessaire pour former la matrice.

Pour assurer la consolidation de la pièce, on utilise un dispositif permettant d'envelopper ladite pièce afin de maintenir les différents éléments lors de la polymérisation de la résine dans une position donnée afin de leur conférer la forme souhaitée.

A cet effet, le dispositif comprend au moins un moule 32 sur lequel sont rapportés les différents éléments constituant la pièce à réaliser. Ce moule a des formes adaptées en fonction de la forme souhaitée de la pièce 30.

Dans le cas, d'un panneau de fuselage, comme illustré sur la figure 4, le moule 32 se présente sous la forme d'un mandrin dont la surface extérieure sur laquelle sont drapés les plis de la pièce à réaliser a des formes adaptées à celles souhaitées de la surface intérieure de la pièce en matériau composite.

Selon les cas, ce moule 32 peut être réalisé en une seule pièce ou à partir de plusieurs pièces mobiles ou non entre elles.

Selon un mode de réalisation, le moule peut être constitué au moins partiellement de l'ossature interne du fuselage comme décrit dans le document FR-2.894.869. Le moule 32 n'est pas plus détaillé, car il est connu de l'homme du métier et peut prendre différentes configurations en fonction des pièces à réaliser.

Lors de la polymérisation, les différents éléments constituant la pièce sont comprimés afin de chasser l'air et les solvants, pour réduire la porosité et pour éviter les risques de défauts susceptibles de réduire les caractéristiques mécaniques de la pièce. A cet effet, le dispositif comprend des moyens de compression. Selon un mode de réalisation, ces moyens de compression comprennent une vessie de compactage 34 qui recouvre les éléments de la pièce à réaliser, des moyens d'étanchéité 36 en périphérie des éléments de la pièce à réaliser assurant l'étanchéité entre le moule 32 et la vessie de compactage 34 ainsi que des moyens 38 pour générer une dépression dans la cavité 40 délimitée par le moule 32 et la vessie 34 dans laquelle sont disposés les éléments de la pièce à réaliser.

La vessie de compactage 34, le joint 36 ainsi que les moyens 38 pour générer la dépression ne sont pas plus détaillés car ils sont connus de l'homme du métier. Afin d'évacuer les gaz (air, solvants, autres) émanant de la pièce à réaliser lors de la polymérisation, le dispositif comprend un système de drainage.

Selon l'invention, le système de drainage comprend au moins une plaque 42 comportant une pluralité d'orifices 44, comme illustré en détails sur la figure 3, ladite plaque 42 étant conformée selon la surface extérieure de la pièce à réaliser. Selon un avantage de l'invention, le même élément (la plaque 42) est utilisé pour assurer les fonctions de drainage et de conformage.

Cette plaque de conformage et de drainage 42 peut être réalisée à partir de différents matériaux. Ainsi, elle peut être métallique ou en matériau composite. Selon un mode de réalisation, la plaque de conformage et de drainage 42 est réalisée en matériau composite et a une épaisseur inférieure à 5 mm approximativement. Compte tenu du rapport entre son épaisseur et sa superficie, la plaque de conformage et de drainage 42 peut être plus ou moins flexible. Cependant, elle n'est pas souple à la manière d'un tissu susceptible de se froisser. Dans la mesure où elle ne peut pas se froisser, la mise en place de la plaque de conformage et de drainage 42 est simple et rapide, ce qui conduit à réduire les temps de mise en oeuvre. De plus, le fait qu'elle soit conformée selon la surface extérieure de la pièce à réaliser permet de simplifier sa mise en place.

Selon un autre avantage, la plaque de conformage et de drainage 42 peut être réutilisée pour plusieurs cuissons contrairement aux tissus drainants de l'art antérieur, ce qui permet d'obtenir un gain en terme de coûts et de déchets.

La fonction de drainage est assurée par la pluralité d'orifices 44 qui permettent de capter les gaz d'un côté de la plaque et de les évacuer de l'autre côté de la plaque.

Selon l'invention, les orifices 44 ont des formes et/ou un agencement adaptés pour limiter la dégradation des caractéristiques aérodynamiques de ladite pièce à réaliser.

Selon les cas, les orifices peuvent avoir différentes géométries.

Dans la variante illustrée, les orifices 44 ont une forme sensiblement circulaire. Cette forme est simple à réaliser et permet d'obtenir un bon compromis entre la fonction de drainage et le fait de ne pas produire des marques à la surface extérieure de la pièce à réaliser, susceptibles de dégrader les caractéristiques aérodynamiques de ladite pièce. Cependant, d'autres formes sont envisageables. Les orifices 44 ont un diamètre et une densité adaptés pour assurer de manière satisfaisante la fonction de drainage sans toutefois produire des marques à la surface extérieure de la pièce à réaliser, susceptibles de dégrader les caractéristiques aérodynamiques de ladite pièce.

Selon l'invention, les orifices ont une section inférieure à 5 mm². Lorsqu'ils sont circulaires, les orifices ont un diamètre inférieur à 1 mm pour ne pas produire de marquage susceptible de dégrader les caractéristiques aérodynamiques de ladite pièce.

Pour assurer une fonction de drainage satisfaisante, le pas entre deux orifices est de l'ordre de 50 mm.

Selon l'invention, les orifices sont disposés suivant des lignes disposées selon le sens de l'écoulement des flux aérodynamiques, en quinconce d'une ligne à l'autre, les orifices d'une même ligne étant espacés entre eux d'une distance de l'ordre de 50 mm.

A titre indicatif, pour des orifices de diamètre inférieur à 1 mm et répartis selon un pas de l'ordre de 50 mm, le taux de surface ouverte à savoir le rapport entre la somme des surfaces des orifices sur la surface de la plaque est de l'ordre de 1256 mm²/m² pour obtenir un bon compromis entre la fonction de drainage et le fait de ne pas produire des marques à la surface extérieure de la pièce à réaliser, susceptibles de dégrader les caractéristiques aérodynamiques de ladite pièce.

Cependant, d'autres dispositions sont envisageables dans la mesure où elles permettent d'obtenir un bon compromis entre la fonction de drainage et le fait de ne pas produire des marques à la surface extérieure de la pièce à réaliser, susceptibles de dégrader les caractéristiques aérodynamiques de ladite pièce. Selon les variantes, la plaque de conformage et de drainage 42 peut être réalisée d'un seul tenant ou à partir de plusieurs pièces disposées bout à bout.

Selon un mode de réalisation illustré sur la figure 4, pour un tronçon donné, la plaque de conformage et de drainage 42 comprend quatre parties, une partie supérieure 42.1, deux parties latérales 42.2, 42.3 et une partie inférieure 44.4. Selon une autre caractéristique de l'invention, le dispositif comprend des moyens 26 pour évacuer les gaz captés par le système de drainage.

Selon un mode de réalisation, ces moyens d'évacuation 46 comprennent d'une part un tissu, par exemple un tissu de verre, interposé entre la vessie de compactage 34 et la plaque de conformage et de drainage 42, et d'autre part au moins un conduit d'échappement permettant avantageusement d'aspirer les gaz.

Pour retirer la résine lors de la polymérisation, un film non perforé 48 étanche aux liquides mais perméable aux gaz est interposé entre la pièce à réaliser 30 et la plaque de conformage et de drainage 42.

Avantageusement, un film 50 à délaminer est prévu en contact direct avec la pièce, favorisant le retrait des différentes couches rapportées sur la pièce à l'issue du procédé.

## Revendications

1. Dispositif pour réaliser une pièce en matériau composite destinée à être en contact avec des flux aérodynamiques, notamment une partie du fuselage, ledit dispositif comprenant au moins un moule (32), des moyens (34, 36, 38) pour comprimer la pièce à réaliser ainsi qu'un système de drainage des gaz émanant de la pièce à réaliser comprenant au moins une plaque (42) comprenant une pluralité d'orifices (44), **caractérisé en ce que** les formes et/ou l'agencement des orifices limitent la dégradation des caractéristiques aérodynamiques de ladite pièce à réaliser, et **en ce que** les orifices (44) ont une section inférieure à 5 mm² et sont disposés suivant des lignes disposées selon le sens de l'écoulement des flux aérodynamiques, en quinconce d'une ligne à l'autre, les orifices d'une même ligne étant espacés entre eux d'une distance de l'ordre de 50 mm.

2. Dispositif pour réaliser une pièce en matériau composite selon la revendication 1, **caractérisé en ce que** les orifices (44) ont une forme sensiblement circulaire.

3. Dispositif pour réaliser une pièce en matériau composite selon la revendication 2, **caractérisé en ce que** les orifices (44) ont un diamètre inférieur a 1 mm.

4. Dispositif pour réaliser une pièce en matériau composite selon l'une quelconque des revendications 1 à 3, **caractérisé en ce que** ladite au moins une plaque (42) est conformée selon la surface extérieure de la pièce à réaliser.

5. Dispositif pour réaliser une pièce en matériau composite selon l'une quelconque des revendications 1 à 4, **caractérisé en ce qu'**il comprend des moyens (26) pour évacuer les gaz captés par le système de drainage.

6. Dispositif pour réaliser une pièce en matériau composite selon la revendication 5, ledit dispositif comprenant une vessie de compactage (34), **caractérisé en ce que** les moyens d'évacuation (46) comprennent d'une part un
tissu interposé entre la vessie de compactage (34) et la plaque (42), et d'autre part au moins un conduit d'échappement.

7. Dispositif pour réaliser une pièce en matériau composite selon l'une quelconque des revendications 1 à 6, **caractérisé en ce qu'**il comprend un film non perforé (48) étanche aux liquides mais perméable aux gaz est interposé entre la pièce à réaliser (30) et la plaque (42).

8. Procédé de réalisation d'une pièce en matériau composite dont une surface est destinée à être en contact avec des flux aérodynamiques, notamment une partie du fuselage, ledit procédé consistant à draper les plis de ladite pièce entre au moins un moule (32) et des moyens (34, 36, 38) pour les comprimer intégrant un système de drainage comprenant au moins une plaque (42) avec une pluralité d'orifices (44) pour permettre le passage des gaz émanant de la pièce à réaliser, **caractérisé en ce qu'**il consiste à utiliser une plaque dont les orifices ont des formes et/ou un agencement limitant la dégradation des caractéristiques aérodynamiques de ladite pièce à réaliser et ont une section inférieure à 5 mm² et sont disposés suivant des lignes disposées selon le sens de l'écoulement des flux aérodynamiques, en quinconce d'une ligne à l'autre, les orifices d'une même ligne étant espacés entre eux d'une distance de l'ordre de 50 mm.

## Claims

1. Device for producing a composite material part that is designed to be in contact with aerodynamic flows, in particular a portion of the fuselage, whereby said device comprises at least one mold (32), means (34, 36, 38) for compressing the part that is to be produced, as well as a system for drainage of the gases emanating from the part that is to be produced that comprises at least one plate (42) comprising a number of openings (44), **characterized in that** the shapes and/or arrangement limit the degradation of the aerodynamic characteristics of said part that is to be produced and **in that** the openings (44) have a section that is smaller than 5 mm² and are arranged along lines that are arranged in the direction of the flow of the aerodynamic flows, in staggered rows from one line to the next, whereby the openings of the same line are spaced apart at a distance on the order of 50 mm.

2. Device for producing a composite material part according to claim 1, wherein the openings (44) have an approximately circular shape.

3. Device for producing a composite material part according to claim 2, wherein the openings (44) have a diameter that is less than 1 mm.

4. Device for producing a composite material part according to any of claims 1 to 3, wherein said at least one plate (42) is shaped according to the outside surface of the part that is to be produced.

5. Device for producing a composite material part according to any of claims 1 to 4, wherein it comprises means (26) for evacuating the gases that are collected by the drainage system.

6. Device for producing a composite material part according to claim 5, whereby said device comprises a compacting bladder (34), wherein the evacuation means (46) comprise, on the one hand, a fabric that is interposed between the compacting bladder (34) and the plate (42), and, on the other hand, at least one exhaust duct.

7. Device for producing a composite material part according to any of claims 1 to 6, wherein it comprises a non-perforated film (48) that is liquid-tight but gas-permeable and that is interposed between the part (30) that is to be produced and the plate (42).

8. Process for producing a composite material part whose a face is designed to be in contract with aerodynamic flows, in particular a portion of the fuselage, said process consisting in draping the folds of said part between at least one mold (32) and means (34, 36, 38) for compressing them comprising a system for drainage comprising at least one plate (42) with a number of openings (44) to allow passage of the gases emanating from the part that is to be produced, **characterized in that** the process consists in using a plate (42) whose openings (44) have shapes and/or arrangement limiting the degradation of the aerodynamic characteristics of said part that is to be produced and have a section that is smaller than 5 mm² and are arranged along lines that are arranged in the direction of the flow of the aerodynamic flows, in staggered rows from one line to the next, whereby the openings of the same line are spaced apart at a distance on the order of 50 mm.

## Patentansprüche

1. Vorrichtung zur Herstellung eines Teils aus Verbundwerkstoff, das dazu bestimmt ist, mit aerodynamischen Strömungen in Kontakt zu sein, insbesondere eines Teils des Flugzeugrumpfes, wobei die Vorrichtung wenigstens eine Form (32), Mittel (34, 36, 38) zum Verdichten des herzustellenden Teils sowie ein System zum Drainieren der von dem herzustellenden Teil stammenden Gase, das wenigstens eine Platte (42) mit einer Vielzahl von Öffnungen (44) aufweist, umfasst, **dadurch gekennzeichnet, dass** die Formen und/oder die anordnung der Öffnungen die Verschlechterung der aerodynamischen Eigenschaften des herzustellenden Teils begrenzen und dass die öffnungen (44) einen Querschnitt von weniger als 5 mm² aufweisen und in Reihen, welche in Strömungsrichtung der aerodynamischen Ströme angeordnet sind, mit einem Versatz von einer Reihe zur nächsten, wobei die öffnungen einer gleichen Reihe um einen Abstand in der Größenordnung von 50 mm voneinander beabstandet sind.

2. Vorrichtung zur Herstellung eines Teils aus Verbundwerkstoff nach Anspruch 1, **dadurch gekennzeichnet, dass** die Öffnungen (44) im Wesentlichen kreisförmig sind.

3. Vorrichtung zur Herstellung eines Teils aus Verbundwerkstoff nach Anspruch 2, **dadurch gekennzeichnet, dass** die Öffnungen (44) einen Durchmesser von weniger als 1 mm aufweisen.

4. Vorrichtung zur Herstellung eines Teils aus Verbundwerkstoff nach einem der Ansprüche 1 bis 3, **dadurch gekennzeichnet, dass** die wenigstens eine Platte (42) entsprechend der Außenfläche des herzustellenden Teils gestaltet ist.

5. Vorrichtung zur Herstellung eines Teils aus Verbundwerkstoff nach einem der Ansprüche 1 bis 4, **dadurch gekennzeichnet, dass** sie Mittel (26) zum Ableiten der durch das Drainagesystem aufgefangenen Gase umfasst.

6. Vorrichtung zur Herstellung eines Teils aus Verbundwerkstoff nach Anspruch 5, wobei die Vorrichtung eine Verdichtungsblase (34) umfasst, **dadurch gekennzeichnet, dass** die Ableitungsmittel (46) einerseits ein zwischen der Verdichtungsblase (34) und der Platte (42) eingefügtes Gewebe und andererseits wenigstens eine Austrittsleitung umfassen.

7. Vorrichtung zur Herstellung eines Teils aus Verbundwerkstoff nach einem der Ansprüche 1 bis 6, **dadurch gekennzeichnet, dass** sie einen flüssigkeitsdichten, aber gasdurchlässigen, nicht perforierten Film (48) umfasst, der zwischen dem herzustellenden Teil (30) und der Platte (42) eingefügt ist.

8. Verfahren zur Herstellung eines Teils aus Verbundwerkstoff, dessen eine Fläche dazu bestimmt ist, mit aerodynamischen Strömungen in Kontakt zu sein, insbesondere eines Teils des Flugzeugrumpfes, wobei das Verfahren darin besteht, die Lagen des Teils zwischen wenigstens einer Form (32) und Mitteln zum Verdichten (34, 36, 38), umfassend ein Drainagesystem, das wenigstens eine Platte (42) mit einer Vielzahl von Öffnungen (44) aufweist, um den Durchgang der von dem herzustellenden Teil stammenden Gase zu ermöglichen, zu drapieren, **dadurch gekennzeichnet, dass** es darin besteht, eine Platte zu verwenden, deren Öffnungen Formen und/oder eine Anordnung aufweisen, welche die Verschlechterung der aerodynamischen Eigenschaften des herzustellenden Teils begrenzen, sowie einen Querschnitt von weniger als 5 mm² aufweisen und in Reihen, welche in Strömungsrichtung der aerodynamischen Ströme angeordnet sind, mit einem Versatz von einer Reihe zur nächsten, wobei die Öffnungen einer gleichen Reihe um einen Abstand in der Größenordnung von 50 mm voneinander beabstandet sind.
